# EUROPÄISCHE PATENTANMELDUNG

(11) **EP 0 889 170 A1**
(43) Veröffentlichungstag der Anmeldung: **07.01.1999**
(21) Anmeldenummer: 98105914.0
(22) Anmeldetag: 01.04.1998
(51) Int. Cl.: E01C 9/00, E01C 11/22, E01C 5/22, E01C 5/08

(54) **Flüssigkeitsdichte und stoffbeständige Fahrbahn sowie Verfahren zu deren Herstellung**

(30) Priorität: 05.07.1997 DE 19728799
(71) Anmelder: SRE GmbH, 26725 Emden (DE)
(72) Erfinder:

(57) **Zusammenfassung**

Bei einer flüssigkeitsdichten und stoffbeständigen Fahrbahn (1) für Be- und Abfüllflächen von Anlagen zum Umgang mit wassergefährdenden Stoffen, insbesondere im Bereich von Tankstellen und Tanklagern, mit einer Mehrzahl von nebeneinander liegenden Fahrbahnplatten (2), deren Oberseiten die Fahrbahnfläche ausbilden, wobei zwischen benachbarten Platten vorhandene Fugen (4) abgedichtet sind, sind unter den Fugen längs diesen durchlaufende, im Querschnitt U-förmige Bauteile (13) mit nach oben zur Fahrbahnfläche hin offenem Querschnitt angeordnet, weist ferner jede Fahrbahnplatte (2) an ihren Rändern auf der der Fahrbahnfläche abgewandten Seite einen umlaufenden nach unten ragenden Vorsprung (28) auf, der in die U-förmigen Bauteile hineinragt, und ist eine Befestigungseinrichtung (30, 61, 20, 21, 22) vorgesehen, mit der die Fahrbahnplatten (2) in den jeweiligen U-förmigen Bauteilen (3) befestigt sind. Verfahren zur Herstellung solcher Fahrbahnen werden ebenfalls vorgeschlagen.

## Beschreibung

Die Erfindung bezieht sich auf eine flüssigkeitsdichte und stoffbeständige Fahrbahn für Be- und Abfüllflächen von Anlagen zum Umgang mit wassergefährdenden Stoffen, insbesondere im Bereich von Tankstellen und Tanklagern, mit einer Mehrzahl von nebeneinander liegenden Fahrbahnplatten, deren Oberseiten die Fahrbahnfläche ausbilden, wobei zwischen benachbarten Platten vorhandene Fugen abgedichtet sind. Die Erfindung bezieht sich auch auf ein Verfahren zur Herstellung solcher Fahrbahnen.

Derartige Be- und Abfüllbereiche sind typischerweise auf Tankstellen zu finden, wo aus Tankfahrzeugen Kraftstoffe in dort vorhandene Tanks abgelassen und über Tanksäulen Kraftstoffe in Kraftfahrzeuge wieder abgegeben werden. Ähnliche Vorgänge laufen auch in Tanklagern, wie beispielsweise Zwischenlagern und Raffinerien, ab. Hier ist jedoch aufgrund der besonderen Abfüllvorrichtungen, die üblicherweise als Abfüllarme mit offenem Auslaß und/oder Abfülleinrichtungen mit lösbaren Abfüllverbindungen ausgebildet sind, sowie der erheblich höheren Befüllrate der Pumpen -Füllraten bis 1200 l/min. sind zugelassen- eine wesentlich größere Leckagegefahr vorhanden.

Ähnlich gefährdete Bereiche sind jedoch auch die Lagerbereiche von Kleingebinden, Transportcontainern usw., die mit flüssigen wassergefährdenden Stoffen gefüllt sind, oder deren Be- und Abfüllflächen, aber auch die Bereiche, in denen derartige Stoffe behandelt oder erstellt werden.

Selbst bei Waschstrassenbereichen und Waschplätzen sowie Werkstattbereichen muß damit gerechnet werden, daß wassergefährdende Stoffe allein über die jeweiligen Fahrbahnbereiche und deren Undichtigkeit in den Boden und damit auch möglicherweise in den Grundwasserbereich gelangen können.

In allen derartigen Bereichen können durch menschliches Versagen, wie zum Beispiel Fehlanschluß oder nicht kraftschlüssiger Anschluß von Abfüllvorrichtungen oder ähnliches, aber auch durch technisches Versagen, wie beispielsweise Bruch der Verbindungsleitung der Flansche usw., wassergefährdende flüssige Stoffen in nicht unerheblichen Mengen austreten und über Undichtigkeiten im Bodenbelag dieser Bereiche in den Boden und möglicherweise auch in das Grundwasser gelangen.

Üblicherweise werden diese Bereiche durch Betonfahrbahnen in Ortbeton-, Klein- oder Großplattenausführung, Faserbeton oder kunststoffbeschichtetem Asphalt abgedichtet. Bei diesen vorbekannten Systemen hat sich jedoch herausgestellt, daß die Dichtigkeit der in der Fahrbahn vorhandenen Fugen auf Dauer nicht gewährleistet ist und wassergefährdende Stoffe durch diese Fugen hindurch in den Untergrund gelangen können.

Aus der DE 44 34 503 A1 ist eine flüssigkeitsdichte Fahrbahn bekannt, in deren Randbereichen gegenüber dem inneren Bereich der Fahrbahn durchgehende, sich entlang des Randes der Fahrbahn erstreckende Erhöhungen und/oder Vertiefungen ausgebildet sind. Die Fahrbahn wird aus einzelnen Metallplatten hergestellt, die fugenlos miteinander verbunden sind, beispielsweise durch Verschweißen, Verschrauben oder Verkleben. Hierdurch wird zwar eine flüssigkeitsdichte Fahrbahn ausgebildet, jedoch ist die Montage mit einem erheblichen technischen und zeitlichen Aufwand verbunden, da die Ränder benachbarter Platten durchgehend aneinander angeschlossen werden müssen. Zudem können bei großflächigen Fahrbahnen aufgrund der beträchtlichen Wärmeausdehnung der Metallplatten Probleme auftreten.

Demgegenüber liegt die Aufgabe der vorliegenden Erfindung darin, eine gattungsgemäße Fahrbahn so zu verbessern, daß die Dichtigkeit der Fugenbereiche mit einfachen Mitteln auf Dauer gewährleistet ist und Plattenbewegungen infolge Temperatur zerstörungsfrei möglich sind. Ferner sollen Verfahren zur einfachen und schnellen Herstellung einer solchen Fahrbahn vorgeschlagen werden.

Erfindungsgemäß wird diese Aufgabe bei einer Fahrbahn der eingangs genannten Art dadurch gelöst, daß unter den Fugen längs diesen durchlaufende, im Querschnitt U-förmige Bauteile mit nach oben zur Fahrbahnfläche hin offenem Querschnitt angeordnet sind, daß ferner jede Fahrbahnplatte an ihren Rändern auf der der Fahrbahnfläche abgewandten Seite einen umlaufenden, nach unten ragenden Vorsprung aufweist, der in die U-förmigen Bauteile hineinragt, und daß eine Befestigungseinrichtung vorgesehen ist, mit der die Fahrbahnplatten in den jeweiligen U-förmigen Bauteilen befestigt sind.

Bei einer erfindungsgemäßen Fahrbahn können durch die Fugenbereiche, selbst bei einer oberflächigen Undichtigkeit der Fugenbereiche, keine wassergefährdenden Stoffe in den Untergrund gelangen. Da unter den Fugen längs diesen ein durchlaufendes Rinnensystem aus im Querschnitt U-förmigen Bauteilen mit nach oben offenem Querschnitt verlegt ist, werden sämtliche durch die Fuge nach unten laufenden Flüssigkeiten bzw. gelangenden Stoffe in diesen U-förmigen Bauteilen aufgefangen und zu einer gewünschten Stelle geleitet, wo die Flüssigkeiten bzw. Stoffe entsorgt werden. Dazu werden die U-förmigen Bauteile auf den Untergrund mit entsprechenden Längsneigungen verlegt, so daß eine sichere Weiter- und Ableitung der Flüssigkeiten und Stoffe gewährleistet ist. Durch die nach unten geschlossenen U-förmigen Bauteile, die untereinander durch geeignete Maßnahmen, beispielsweise Verschraubung oder Verschweißung, verbunden und an ihren Stoßkanten durch geeignete Dichtungsmassen flüssigkeitsdicht und stoffbeständig abgedichtet sind, entsteht ein zum Untergrund hin absolut dichter Fugenbereich.

Die auf die Fahrbahnfläche auftreffenden Flüssigkeiten und Stoffe werden über die an den Fahrbahnplatten angeordneten umlaufenden, nach unten ragenden Vorsprünge in die U-förmigen Bauteile geleitet, so daß sämtliche auf die Fahrbahnfläche gelangenden wassergefährdenden Stoffe in den U-förmigen Bauteilen gesammelt und von diesen zur Entsorgung weitergeleitet werden. In die U-förmigen Bauteile eindringende Flüssigkeiten verbleiben in diesen Bauteilen und können nicht in den Untergrund gelangen, sondern fließen dem Gefälle folgend bis zur tiefsten Stelle, an der ein Straßeneinlauf eingesetzt ist, und werden dort über Entwässerungsrohre, die zum Untergrund hin ebenfalls flüssigkeitsdicht und stoffbeständig abgedichtet sind, in den jeweiligen Straßeneinlauf eingeleitet, von wo aus sie beispielsweise einem nachgeschalteten Leichtflüssigkeitsabscheider zugeleitet werden können. Auf diese Weise können im Bereich der Fahrbahn Flüssigkeiten von oben nicht unterhalb der Fahrbahn gelangen, sondern werden immer in einen Abscheider und von dort in die öffentliche Kanalisation geleitet.

Durch ihre Befestigung an den jeweiligen U-förmigen Bauteilen sind die Fahrbahnplatten in ihrer Lage zueinander und zu den U-förmigen Bauteilen fixiert. Eine Lageänderung der Fahrbahnplatten, wie zum Beispiel ein Herausrutschen einer Fahrbahnplatte aus einem U-förmigen Bauteil, wird auf diese Weise verhindert.

Vorteilhafterweise sind die U-förmigen Bauteile im eingebauten Zustand der Fahrbahnplatten mit Dichtmasse gefüllt, wobei zwischen der Dichtmasse und dem Boden der U-förmigen Bauteile ein Freiraum vorhanden ist. Als Dichtmasse kann zum Beispiel Moosgummi und/oder Polysulfid-Dichtmasse vorgesehen werden, mit denen eine vorschriftsmäßige Fuge ausgeführt werden kann, die in der Lage ist, unvermeidbare Plattenbewegungen gegeneinander zerstörungsfrei aufzunehmen. Durch die Füllung mit Dichtmasse wird ein beträchtlicher Teil der auf die Fahrbahnfläche gelangenden Flüssigkeiten bzw. Stoffe bereits an der Oberfläche abgeleitet. Der vorgesehene Freiraum ermöglicht ein ungehindertes Ablaufen der in die U-förmigen Bauteile unter die Dichtmassen gelangenden Flüssigkeiten.

Mit Vorzug liegt die Oberkante der Dichtmasse unterhalb der Fahrbahnfläche. Da die Fahrbahnplatten mit Vorsprüngen in die U-förmigen Bauteile hineinragen, kann die Fuge zwischen benachbarten Fahrbahnplatten relativ schmal -etwa 15 mm- ausgebildet sein und daher die Dichtmasse unterhalb der befahrenen Fahrbahnfläche, beispielsweise in einem Abstand von 5-8 mm von dieser, enden. Hierdurch wird eine Beanspruchung der Dichtmasse durch Oberflächendrücke, wie sie bei bekannten Systemen vorkommen können, verhindert, so daß die Dichtmasse wirklich nur an ihren Flanken und damit nur zweiseitig belastet wird.

In einer günstigen Weiterbildung der Erfindung sind die Fahrbahnplatten so verlegt, daß in den Fugen ausschließlich T-und L-Kreuzungen vorhanden sind. Auf diese Weise werden kreuzartige Fugenbereiche vermieden, die beim Verfugen mit Dichtmassen erfahrungsgemäß Probleme aufweisen und eine dauerhafte Dichtheit beeinträchtigen könnten.

Besonders vorteilhaft ist es, wenn die U-förmigen Bauteile U-Profile aufweisen, die mittels im Querschnitt U-förmigen und in der Draufsicht T- oder L-förmigen Verbindern miteinander verbunden sind. Diese T- bzw. L-Verbinder können sowohl zur vorhandenen Fahrbahnoberfläche als auch zu den einzulegenden U-Profilen nahezu beliebig ausgerichtet werden, beispielsweise über Gewindestangen bzw. Länglöcher und Schrauben, so daß auch noch während der Montage unvermeidbare Fertigungstoleranzen ausgeglichen werden können. Alle Verbinder werden werksseitig komplett vormontiert, so daß vor Ort eine schnelle und exakte Montage möglich ist. Nach dem Ausrichten und Fixieren der T- und/oder L-Verbinder, wobei gleichzeitig die zu den Verbindern führenden U-Profile ausgerichtet werden, werden alle Metallstöße, eventuelle Schraubendurchführungen und Langlochflächen mit einer Dichtmasse, beispielsweise standfestem bauartzugelassenen Polysulfid, verschlossen.

Vorzugsweise sind die Fahrbahnplatten und die U-förmigen Bauteile aus Metall hergestellt. Mit dieser Maßnahme ist eine sichere Dichtheit der Fahrbahnplatten und der U-förmigen Bauteile gewährleistet sowie eine relativ einfache und schnelle Herstellung und Montage möglich.

Dabei sind ganz besonders bevorzugt die Fahrbahnplatten aus Blech hergestellt, dessen Oberseite Erhebungen und Vertiefungen aufweist und dessen Ränder zur Ausbildung der umlaufenden Vorsprünge nach unten abgekantet sind, wobei die Stoßkanten der Abkantungen flüssigkeitsdicht abgedichtet sind. Mit diesen Maßnahmen wird die Herstellung der Fahrbahnplatten weiter beträchtlich vereinfacht.

Eine weitere Vereinfachung ergibt sich dabei, wenn das Blech ein Tränenblech ist.

In weiterer günstiger Ausgestaltung der Erfindung ist die Oberseite der Fahrpahnplatten mit elektrisch leitfähigem, rutschfesten, stoffbeständigen Kunststoff beschichtet, dessen Oberseite die Fahrbahnfläche ausbildet. Hierdurch wird insbesondere die Rutschfestigkeit und die Stoffbeständigkeit der Fahrbahnfläche erhöht.

Von Vorteil ist es dabei, wenn die Dicke der Kunststoffbeschichtung mindestens 6 mm beträgt.

In einer bevorzugten Ausführungsform der Erfindung sind in den Seitenflächen der Vorsprünge im wesentlichen parallel zur Fahrbahnoberfläche verlaufende längliche Ausnehmungen vorgesehen und ist die Befestigungseinrichtung als Drehflügelverbindung ausgebildet, deren Drehflügel zur Befestigung der Fahrbahnplatte in die Ausnehmung eingreifend drehbar ist. Hierdurch wird die Montage weiter vereinfacht, da durch einfaches Drehen der Drehflügel die Fahrbahnplatten gegeneinander und in bezug auf die U-förmigen Profile festgesetzt werden können.

Vorteilhafterweise sind die Fahrbahnplatten zum Teil als Oberflächenwasserrinne ausgebildet. Die erforderlichen Entwäserungs- bzw. Ablaufrinnen sind dadurch als separate Fahrbahnplatten voll in das Gesamtsystem integriert und müssen nicht durch andere Formteile, die nur schwierig abgedichtet werden können, erstellt werden, so daß diese Bereiche ebenfalls dauerhaft flüssigkeitsdicht und stoffbeständig ausgeführt sind. Die zu entwässernden Fahrbahnen sind dabei zu den integrierten Entwässerungsrinnen hin mit stetigem Gefälle verlegt. Eine bei Überfahrung der jeweiligen Querseiten entstehende sehr hohe Belastung auf sehr kleiner Fläche wird bei der erfindungsgemäßen Fahrbahn aufgrund der mittels U-förmigen Bauteile erreichten Verbindung zu den Fahrbahnplatten direkt auf diese Fahrbahnplatten übertragen und führt nicht wie bei herkömmlichen Rinnensteinen zu Verschiebungen und infolgedessen zu Undichtigkeiten in den Stoßfugen.

Ebenfalls bevorzugt ist ein Teil der Fahrbahnplatten als Überfahrrampe verlegt, wobei der der Fahrbahn abgewandte Rand der Fahrbahnplatten außerhalb der Be- bzw. Abfüllflächen liegt. Die erforderlichen Überfahrbereiche zur Ein- oder zur Ausfahrt in die bzw. aus den Be- und Abfüllflächen sind auf diese Weise ebenfalls in das Gesamtsystem integriert, wobei die schwer abzudichtenden Fugenbereiche an den Außenrändern der Fahrbahn außerhalb des abzudichtenden Bereiches liegen.

In einer weiteren vorteilhaften Ausführungsform der Erfindung sind die U-förmigen Bauteile mit stetigem Gefälle zu mindestens einem Straßeneinlauf hin verlegt, der an einen Abscheider angeschlossen ist. Die in die U-förmigen Bauteile eingedrungenen Flüssigkeiten, die auch wassergefährdende Stoffe enthalten können, gelangen so direkt oder nach einer gewissen Zeitverzögerung in eine Abscheideranlage, beispielsweise eine Leichtflüssigkeitsabscheideranlage, so daß in jedem Fall ein Eindringen von wassergefährdenden Stoffen in den Fahrbahnuntergrund vermieden wird.

Dabei ist ganz besonders bevorzugt zur Entwässerung der U-förmigen Bauteile ein Rohr vorgesehen, dessen eines Ende in den Straßeneinlauf hineinragt und dessen anderes Ende mit dem am tiefsten liegenden U-förmigen Bauteil verbunden ist. Dieses Entwässerungsrohr kann auch zur Kontrolle der Fugendichtheit verwendet werden, indem an ihm eine Vakuumpumpe angeschlossen wird und gasende Flüssigkeitsanteile über ein Prüfrohr gesaugt werden. Auf diese Weise ist eine zerstörungsfreie Kontrolle der Flächendichtheit möglich.

In weiterer bevorzugter Ausbildung der Erfindung sind die U-förmigen Bauteile bis zu ihrer Oberkante einbetoniert. Da die Fahrbahnplatten somit direkt auf dem Betonunterbau aufliegen, sind sie statisch nicht belastet, weil die Radlasten direkt in den Untergrund abgegeben werden können und sich dort auf eine größere Fläche verteilen. Die zwischen den gitterförmig verlegten, U-förmigen Bauteilen sich ergebenden Gitterflächen werden dabei mit einem schnellfließenden und aushärtenden Spezialbeton gefüllt, in den Baustahlmatten zur Verteilung der Belastungen eingelegt sind. Die Beton-Auffüllungen werden zu den jeweiligen Oberkanten der U-förmigen Bauteile plangezogen. Durch die Beton-Auffüllungen wird auch die durch Sonneneinstrahlung in die Fahrbahnplatten gelangende Wärme großflächig abgeleitet, so daß eine übermäßige Erwärmung der Platten nicht vorkommen kann. Umgekehrt wird bei Frostgefahr aus dem gleichen Grund eine stark differierende Temperatur-verteilung innerhalb des Fahrbahnsystems wirkungsvoll verhindert. Da sämtliche U-förmigen Bauteile einschließlich der T- und/oder L-Verbinder komplett in Beton eingebettet sind, behalten die U-förmigen Bauteile auf Dauer ihre Position, so daß auch eine dauerhafte Dichtigkeit dieser Bereiche gewährleistet ist.

In einer bevorzugten Ausführungsform der Erfindung sind Beton-Fertigplatten vorgesehen, die jeweils an mindestens einem ihrer Ränder auf der der Fahrbahnfläche zugewandten Seite ein anbetoniertes, U-förmiges, zur Fahrbahnfläche hin offenes Bauteil aufweisen, dessen Oberkante in oder unter der Oberseite der jeweiligen Beton-Fertigplatte liegt. Vor allem für kleinere Be- und Abfüllflächen, die in der Regel nicht überdacht sind, wie es bei Betriebstankstellen und kleineren Tanklagern typisch ist, kann der Fahrbahnunterbau unterhalb der Fahrbahnplatten so komplett werksseitig vormontiert werden, so daß wetterbedingte Unsicherheiten ausgeschaltet werden. Diese Beton-Fertigplatten können auch zum Bau von Betriebs- und Baustellenstraßen, die schnell montiert und demontiert werden müssen, eingesetzt werden, da sie vor Ort nur noch miteinander verbunden, beispielsweise zusammengeschraubt, werden müssen. Auf diese Beton-Fertigteile werden die gleichen Fahrbahnplatten aufgesetzt, wie sie auch bei den mit Ortbeton einbetonierten U-förmigen Bauteile verwendet werden.

Dabei sind vorteilhafterweise längs der anderen Ränder der Beton-Fertigplatten an deren Umfangsflächen Flachprofile anbetoniert, von denen Befestigungsmittel vorragen, die zum Eingriff mit entsprechenden an den U-förmigen Bauteilen ausgebildeten Befestigungsmitteln geeignet sind, um benachbarte Beton-Fertigplatten miteinander zu verbinden. Die Oberkante der Flachprofile liegt ebenfalls in oder unter der Oberseite der Beton-Fertigplatten. Die Befestigungsmittel können beispielsweise eine vom Flachprofil senkrecht zur Umfangswand der Beton-Fertigplatte vorragende Gewindestange sowie in der Außenwandung der U-förmigen Bauteile vorgesehene Langlöcher sein, mit denen auf einfache Weise die Beton-Fertigplatten aneinander befestigt werden können.

Bevorzugt sind die Beton-Fertigplatten rechteckig geformt. Hierdurch wird sowohl die Fertigung als auch die Montage weiter vereinfacht.

Ferner sind mit Vorteil in den Außenwandungen der U-förmigen Bauteile bis zu deren Boden sich erstreckende Aussparungen vorgesehen, durch die hindurch auf dem Boden befestigte Verbindungslaschen über die U-förmigen Bauteile hinaus vorragen, um in die U-förmigen Bauteile einer angrenzenden Beton-Fertigplatte zur Verbindung mit diesen einzugreifen. So können mit den Beton-Fertigplatten auf einfache Weise durchgehende U-förmige Bauteile zusammengesetzt werden.

In weiterer günstiger Fortbildung der Erfindung ist bei Tankstellen eine Säuleninsel mit Zapfsäulen auf die Fahrbahnplatten aufgesetzt und an diesen befestigt und werden die zu den Zapfsäulen führenden Rohre und Kabel in Um-Rohren durch die Fahrbahnplatten hindurchgeführt, wobei die Um-Rohre mit den Fahrbahnplatten flüssigkeitsdicht und stoffbeständig verbunden sind. Da die Säuleninsel auf die bereits verlegten Fahrbahnplatten aufgesetzt ist und die notwendigen Rohre und Kabel durch ein oder mehrere Um-Rohre hindurchgeführt werden, ist eine dauerhafte Dichtigkeit dieses kritischen Bereiches gewährleistet.

Ganz besonders bevorzugt sind dabei die Um-Rohre oben durch eine Dichtmasse geschlossen.

Zur Herstellung einer flüssigkeitsdichten und stoffbeständigen Fahrbahn wird ein Verfahren vorgeschlagen, bei dem auf den vorhandenen Untergrund ein zur Fahrbahnfläche hin offenes Rinnensystem verlegt wird, das zu mindestens einen Straßeneinlauf hin entwässert und auf das Fahrbahnplatten gelegt werden, wobei jede der Fugen zwischen den Fahrbahnplatten über einer Rinne verläuft. Die auf die Fahrbahnplatten auftreffenden Flüssigkeiten und Stoffe werden, soweit sie nicht schon auf den Fahrbahnplatten selbst entsorgt werden, vom Rinnensystem aufgefangen und einer Sammel- und Reinigungsstelle zugeleitet. Jedes Eindringen von wassergefährdenden Stoffen in den Fahrbahnuntergrund wird auf diese Weise sicher verhindert.

Mit den im Anspruch 24 angegebenen Verfahrensschritten werden die Bestandteile einer erfindungsgemäßen Fahrbahn sämtlich erst vor Ort montiert, insbesonders werden die Gitterfelder mit Ortbeton ausgegossen.

Dagegen werden gemäß dem im Anspruch 25 angegebenen Verfahren einzelne Beton-Fertigplatten mit an deren Rändern einbetonierten U-förmigen Bauteilen werksseitig vorab hergestellt und vor Ort lediglich zusammengesetzt und miteinander verbunden. Dieses Verfahren ist besonders bei ungünstigen Witterungsbedingungen, wie zum Beispiel im Winter, oder bei äußerst kurzfristigen Montagen geeignet.

Vorzugsweise enthält der Schritt des Betonierens jeweils das vorherige Verlegen einer geeigneten Bewehrung zwischen den U-förmigen Bauteilen bzw. Flachprofilen, um die Belastungsfähigkeit zu erhöhen und die Rissempfindlichkeit zu verringern.

In weiterer Ausgestaltung der Erfindung werden vor dem Schritt des Verlegens der Fahrbahnplatten auf dem Beton zunächst eine Gummigranulatschicht auf der Betonoberfläche und darauf eine Kunststofffolie verlegt, die die Gummigranulatschicht abdeckt und bis in die U-förmigen Bauteile hineinreicht. Die Gummigranulatschicht dient sowohl der Geräuschdämmung als auch der Bewegungsaufnahme der Platten. Die Kunststofffolie hat zwei Funktionen. Zum einen soll sie durch den Beton aufsteigende Bodenfeuchtigkeit nicht direkt an die Fahrbahnplattenunterseite gelangen lassen und somit als zu-sätzliche Flüssigkeits- und Dampfsperre dienen. Zum anderen soll sie aber auch eine ungestörte komplette Aushärtung der Betonflächen, bei der ebenfalls Feuchtigkeit in nicht unerheblichen Mengen freigesetzt werden kann, ermöglichen und die freigesetzte Feuchtigkeit zu den Innenseiten der U-förmigen Bauteile ableiten, aus denen sie dann gefahrlos zu den Straßeneinläufen und damit zu den Abscheidern hin austreten kann.

Von Vorteil ist es, wenn nach dem Befestigen der Fahrbahnplatten an den U-förmigen Bauteilen diese mit Dichtungsmasse gefüllt werden, wobei die Oberkante der Dichtungsmasse unterhalb der Fahrbahnfläche und die Unterkante der Dichtungsmasse in einem Abstand zum Boden der U-förmigen Bauteile liegen sollte.

Die Erfindung wird nachfolgend anhand der Zeichnung beispielshalber noch näher erläutert. Es zeigen:
Fig. 1 eine Draufsicht auf eine erfindungsgemäße Fahrbahn;
Fig. 2 einen Längsschnitt durch die Fahrbahn aus Fig. 1 längs Linie II-II;
Fig. 3 einen Querschnitt durch eine Fuge zwischen zwei benachbarten Fahrbahnplatten;
Fig. 4 einen Querschnitt durch eine Fuge zwischen einer Fahrbahnplatte und einer Fahrbahnbegrenzung;
Fig. 5 eine Draufsicht auf einen T-Verbinder;
Fig. 6 eine Ansicht des T-Verbinders aus Fig. 5 in Richtung des Pfeils A;
Fig. 7 eine Hälfte eines Querschnitts durch eine Säuleninsel;
Fig. 8 eine perspektivische Draufsicht auf mehrerer Ausführungsformen von Beton-Fertigplatten, die zu einer erfindungsgemäßen Fahrbahn zusammensetzbar sind, und
Fig. 9 eine der Fig. 8 ähnliche Perspektivansicht, jedoch mit einem als Beton-Fertigteil ausgebildeten Straßeneinlauf, an den Beton-Fertigplatten anschließbar sind.

Die in den Figuren dargestellte Fahrbahn 1 ist aus nebeneinander liegenden Fahrbahnplatten 2 zusammengesetzt und weist ein darunter liegendes Gitter aus U-förmigen Bauteilen 3 auf, die unter den zwischen den einzelnen Fahrbahnplatten 2 vorhandenen Fugen 4 verlaufen.

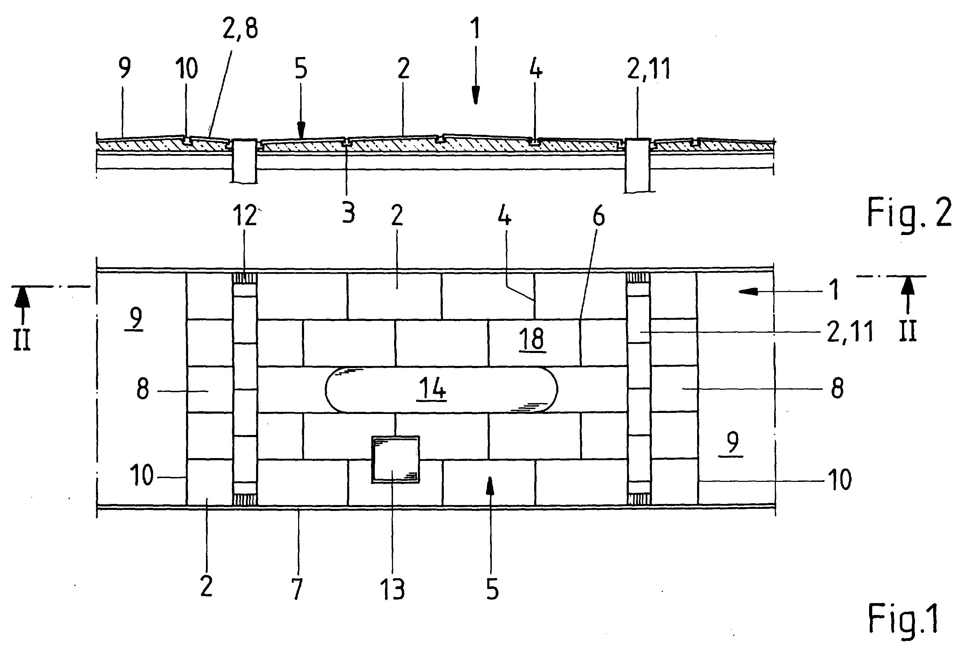

Wie in Fig. 1 dargestellt ist, weist die Fahrbahn 1 einen Hauptbereich 5 mit mehreren Reihen von Fahrbahnplatten 2 auf, wobei die Fahrbahnplatten 2 zweier benachbarter Reihen um eine halbe Plattenlänge zueinander versetzt sind, so daß in den Fugen 4 zwischen den Platten 2 nur T-förmige Kreuzungsbereiche 6 auftreten. Die Fahrbahn 1 wird an ihren Längsrändern 7 durch Bordsteine begrenzt. Am Anfang und am Ende der Fahrbahn sind in Querrichtung verlaufende Übergänge 8 vom Hauptbereich 5 der erfindungsgemäßen Fahrbahn 1 zu weiterführenden herkömmlichen Fahrbahnbereichen 9 vorhanden. Diese Übergänge werden durch als Überfahrrampe verlegte Fahrbahnplatten 8 gebildet, deren Außenrand 10 außerhalb des Be- und Abfüllbereiches liegt. Die Neigung der Überfahrrampe 8 ist relativ gering, d. h. die Überfahrwege verhältnismäßig lang, so daß extreme Stöße auf die Fahrbahn 1 und Beschädigungen an überfahrenden Fahrzeugen, die ansonsten bei kurzen Überfahrrampen und sehr tief liegenden Fahrzeugen vorkommen können, vermieden werden. Zwischen den als Übergangsrampe verlegten Fahrbahnplatten 8 und dem Hauptbereich 5 sind als Oberflächenwasserrinne 11 ausgebildete Fahrbahnplatten verlegt. An jeweils beiden Enden der Oberflächenwasserrinnen 11 sind Straßeneinläufe 12 angeordnet, in die das in die Oberflächenwasserrinnen 11 einfließende Wasser eingeleitet wird.

Im Hauptbereich 5 der Fahrbahn 1 ist ein Fahrbahneinbau 13 vorhanden, im dargestellten Beispiel ein Domschacht. In der Mitte des Hauptbereiches 5 ist auf die Fahrbahnplatten 2 eine Säuleninsel 14 aufgesetzt, auf der beispielsweise Zapfsäulen installiert werden können.

Aus Fig. 2 ist ersichtlich, daß der Hauptbereich 5 der Fahrbahn 1 in Längsrichtung mit einer geeigneten Neigung bogenförmig verlegt ist, so daß der Scheitelpunkt in der Mitte angeordnet ist und das Wasser nach links bzw. nach rechts zu den jeweiligen Oberflächenwasserrinnen 11 fließt. Entsprechend ist auch in Querrichtung die Fahrbahn 1 mit einer entsprechenden Neigung verlegt, so daß das Wasser vom Scheitelpunkt aus in die Straßeneinläufe 12 fließt.

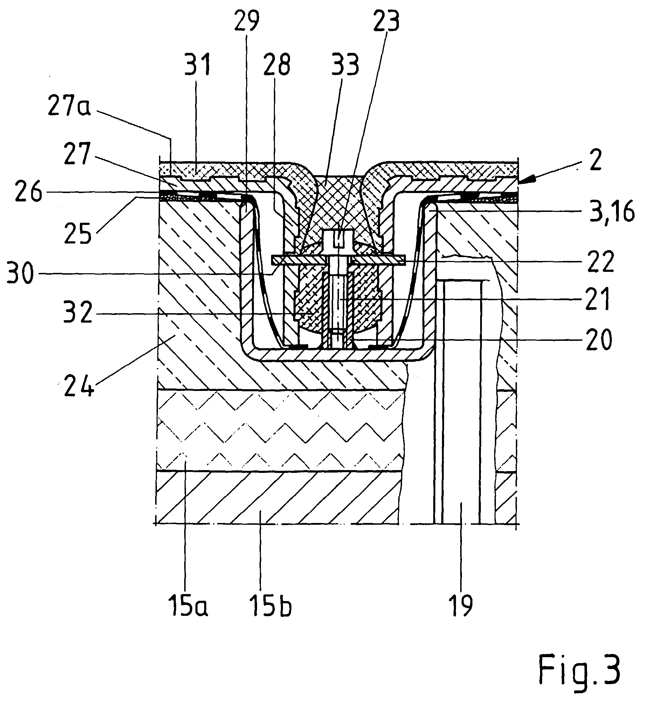

In Fig. 3 ist die Ausbildung der Fugen 4a zwischen benachbarten Fahrbahnplatten 2 dargestellt. Im gezeigten Beispiel wird die erfindungsgemäße Fahrbahn 1 auf eine vorhandene Fahrbahn 15 aufgesetzt.

Auf dem vorhandenen Fahrbahnoberbau 15a liegen die U-förmigen Bauteile 3 auf, wobei die U-förmigen Bauteile 3 in ihrer Längsrichtung geneigt verlegt sind, um die Weiterleitung von in ihnen aufgefangenen Flüssigkeiten zu ermöglichen, so daß zwischen der Unterkante eines U-förmigen Bauteiles 3 und der Oberkante des vorhandenen Fahrbahnoberbaus 15a ein Abstand vorhanden sein kann. Die U-förmigen Bauteile 3 sind aus U-Profilen 16 sowie T- und/oder L-Verbindern 17 gebildet und gitterförmig mit rechteckigen Gitterflächen bzw.- feldern 18 auf dem vorhandenen Fahrbahnoberbau 15a verlegt. Die U-förmigen Bauteile 3 sind aus handelsüblichen Stahl hergestellt und an Bodenankern 19 mittels Schweißnähten befestigt. Die Bodenanker 19 sind durch den vorhandenen Fahrbahnoberbau 15a hindurchgeführt und im vorhandenen Fahrbahnunterbau 15b verankert. Der Bodenanker 19 kann beispielsweise als T- oder Winkelprofil ausgeführt sein, er sollte mindestens 80 cm lang sein.

Auf dem Boden der nach oben offenen U-förmigen Bauteile 3 sind mittig und in Längsrichtung mit Abstand Gewindehülsen 20 aufgeschweißt, in die jeweils eine selbstsichernde Gewindeschraube 21 eingeschraubt ist. Die Gewindeschraube 21 durchläuft eine Bohrung in einem Drehflügel 22 und liegt auf diesem mit der Unterseite des Schraubenkopfes auf, wobei im dargestellten Beispiel der Schraubenkopf in seinem unteren Bereich gegenüber dem oberen Schraubenkopfbereich verbreitert ist. In der Stirnseite des Schraubenkopfes ist eine Öffnung 23 ausgebildet, in die ein Schraubenschlüssel einsetzbar ist, mit dem die Gewindeschraube 21 gedreht werden kann.

Die U-förmigen Bauteile 3 sowie die Bodenanker 19 sind einbetoniert, wobei die Oberkante der Betonschicht 24 mit der Oberkante der U-förmigen Bauteile 3 bündig ist. Auf die Betonfläche wird eine Gummigranulatschicht 25 aufgebracht, die in der Mitte der Gitterfelder 18 etwa 2 mm bis 3 mm dick ist und zu den U-förmigen Bauteilen 3 hin ausläuft. Die Gummigranulatschicht 25 ist mit einer Kunststofffolie 26, die bis in die U-förmigen Bauteile 3 hineinreicht, abgedeckt.

Auf der Kunststofffolie 26 liegen Fahrbahnplatten 2 auf, die im dargestellten Beispiel aus Tränenblech 27 hergestellt sind, wobei die Tränenseite 27a die Oberseite, d. h. die der Fahrbahnfläche zugewandten Seite ausbildet.

Die Tränenblechplatten 27 können zum Beispiel aus St 37/2 hergestellt sein mit einer Dicke von 5 mm plus 2 mm Tränenhöhe. Die Ränder der Tränenbleche 27 sind umlaufend nach unten abgekantet. Die Stoßkanten der Abkantungen 28 sind flüssigkeitsdicht miteinander verschweißt. Sämtliche Tränenbleche 27 sind allseitig rostschutzbehandelt. Die Abkantungen 28 ragen in die U-förmigen Bauteile 3 in der Nähe deren Seitenwandungen 29 und in etwa parallel zu diesen hinein, wobei die Kunststofffolie 26 unter den Abkantungen 28 hindurchläuft. In den Abkantungen 28 der Tränenbleche 27 sind Löcher 30 ausgebildet, in die die Drehflügel 22 eingreifen, um so die Tränenplatten 27 gegenüber den U-förmigen Bauteilen 3 und auch gegeneinander zu befestigen bzw. zu arretieren, ohne Bewegungen aufgrund temperaturbedingter Dehn- und Stauchvorgänge zu behindern.

Die Oberseiten 27a der Tränenblechplatten 27 sind mit einer mindestens 6 mm dicken Kunststoffbeschichtung 31, z. B. anthrazitfarbenes Polyurethan, versehen, deren elektrischer Widerstand sehr gering ist - beispielsweise < 10⁸ Ohm/m² - und die somit elektrisch leitfähig ist. Ferner ist die Kunststoffbeschichtung 31 stoffbeständig gegen Kraftstoffe A I und A III, Brennflüssigkeiten, Motor- und Getriebeölen, Schmierölen und -fetten, leichten Säuren und Laugen. Zur Erzielung der notwendigen Rutsch- und Abriebfestigkeit kann gebrannter Quarzsand beigemengt sein. Diese Kunststoffbeschichtung 31 erstreckt sich etwa 10 mm an den Abkantungen 28 herunter und läuft über den Drehflügeln 22 aus.

Als Dichtmasse ist im unteren Bereich der U-förmigen Bauteile 3, jedoch mit Abstand zum Boden der U-förmigen Bauteile 3 eine Moosgummiabdichtung 32 vorgesehen, die mit Druck an den Abkantungen 28 der Tränenblechplatten 27 anliegt und so die Seitenbereiche abdichtet. Die Moosgummiabdichtung 32 erstreckt sich bis etwas oberhalb der Drehflügel 22, d. h. bis etwa dorthin, wo die Kunststoffbeschichtung 31 der Tränenblechplatten 27 ausläuft. Die vom Moosgummi 32 nach unten oder zu den Seiten hin nicht verschlossenen Bereiche sind mit standfester Polysulfid-Dichtmasse verschlossen. Der restliche Fugenbereich wird bis ca. 5 bis 8 mm unterhalb der Fahrbahnoberfläche mit fließfähiger Polysulfid-Dichtmasse 33 aufgefüllt. Die Dichtmassen 32, 33 können die Dehnungs- und Stauchungsbewegungen der Fahrbahnplatten 2 aufnehmen, wobei das Moosgummi 32 eine Drei-Seiten-Bindung der Polysulfid-Dichtmasse 33 verhindert, die sehr schnell zur Zerstörung der Fugenabdichtung führen würde. Aufgrund der Rauhigkeit der Kunststoff-Oberfläche der Tränenblechplatten 27 ergibt sich zu den Flanken hin eine dauerhaft dichte Verbindung. Zudem sind die Drehflügelverbindungen 22 durch die Dichtmassen 32, 33 fixiert, so daß sie ihre Lage im Nachhinein nicht mehr verändern können.

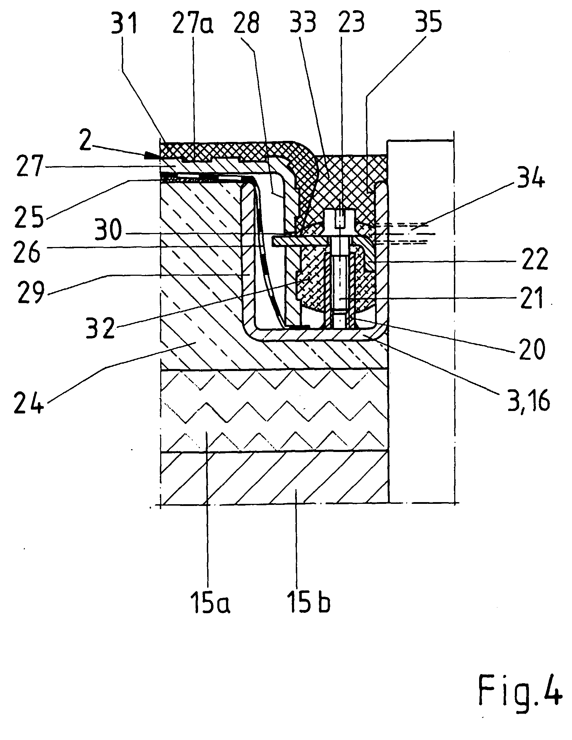

In Fig. 4 ist die Fugenausbildung bei Fahrbahneinbauten 13, wie z. B. Domschächten usw., und bei Übergängen zu Bordsteinen 7 und anderen Fahrbahnbereichen 9 dargestellt. Bei dieser Fugenausbildung erfolgt die Verankerung der U-förmigen Bauteile 3 nicht im vorhandenen Fahrbahnunterbau 15b sondern in den Fahrbahneinbauten 13 bzw. in den Bordsteinen 7 oder anderen Fahrbahnbereichen 9. Die Befestigung im Beton kann beispielsweise über die Seitenwandung 29 der U-förmigen Bauteile 3 durchlaufende Spreizdübel erfolgen. Bei Metall können durch die Metallfläche hindurchreichende Schrauben 34 vorgesehen werden, die beidseitig mit einem Dichtring und Federscheiben unterlegt und auf der Gegenseite mittels selbstsichernder Muttern gekontert sind. Der Drehflügel 22 ist auf der der Fahrbahnplatte 2 abgewandten Seite einseitig abgebogen und liegt an der Innenwandung 35 des jeweiligen U-förmigen Bauteils 3 an. Zu beachten ist, daß die Gewindehülse 20 zu der den Einbauten 13 oder dergleichen zugewandten Seite hin versetzt ist, um den abzudichtenden Fugenbereich so schmal wie möglich zu halten. Die übrige Fugenausbildung entspricht der in Fig. 3 dargestellten.

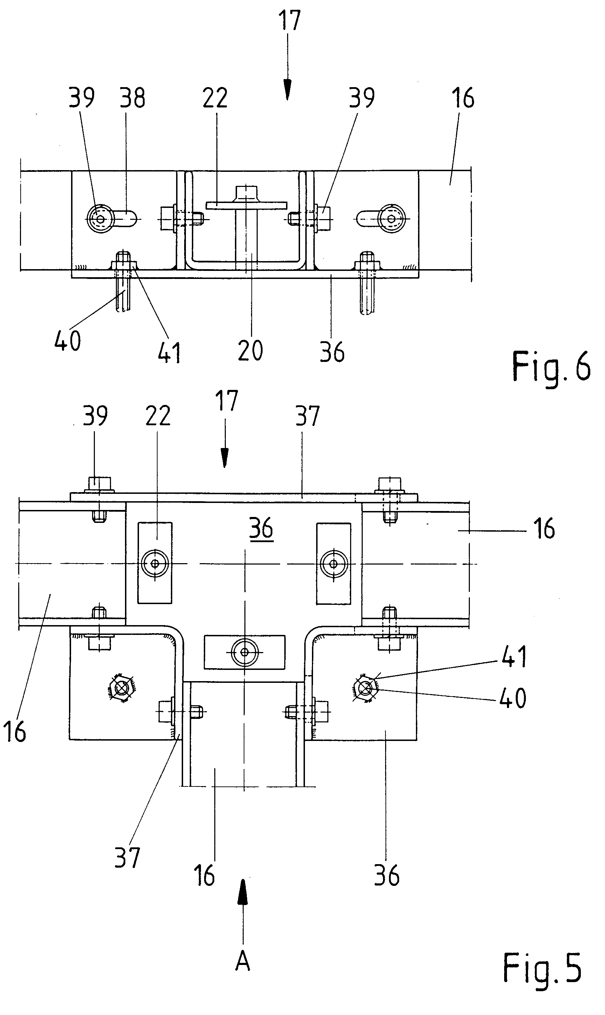

Zur Verbindung der U-Profile 16 dient der in den Fig. 5 und 6 dargestellte T-Verbinder 17. Er ist im dargestellten Beispiel aus Stahl hergestellt und weist eine Grundplatte 36 sowie darauf aufgeschweißte, zum Teil abgewinkelte Flacheisen 37 auf, die als Führung der einzulegenden U-Profile 16 dienen. In den Flacheisen 37 sind Langlöcher 38 ausgebildet, die von selbstsichernden Schrauben 39 zur Befestigung des eingelegten U-Profiles 16 durchlaufen werden, wobei unter dem Schraubenkopf ein Federring angeordnet ist. Im Inneren des T-Verbinders 17 und in einem Abstand zu den Enden der U-Profile 16 sind Drehflügelbefestigungen 22 angeordnet, die zur Arretierung der einzulegenden Fahrbahnplatten 2 dienen. Zur Nivellierung der T-Verbinder 17 und damit der Fahrbahn 1 dienen Gewindestangen 40, die die Grundplatte 36 durchlaufen und mit auf der Grundplatte 36 aufgeschweißten Muttern 41 in Eingriff stehen.

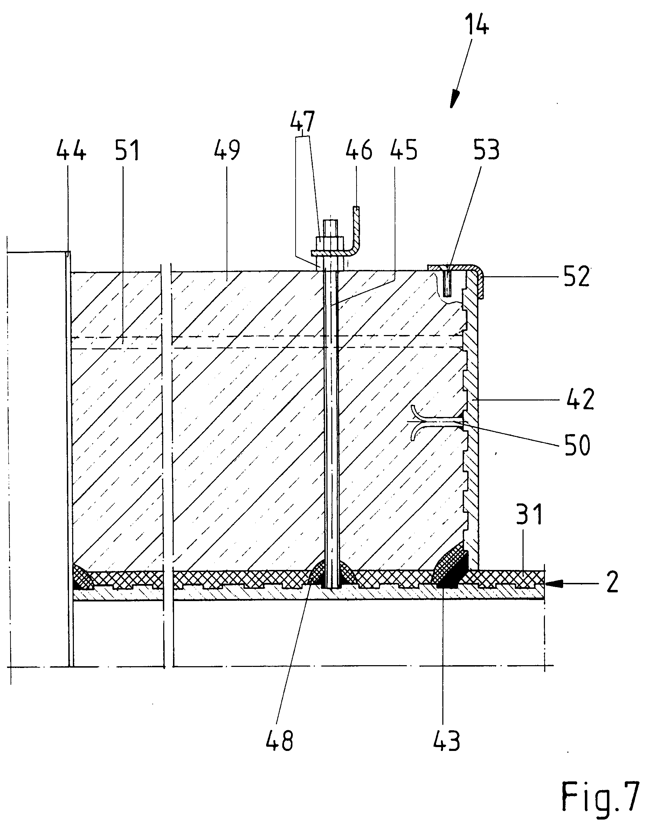

Ein Beispiel für eine auf eine erfindungsgemäße Fahrbahn 1 aufgesetzte Säuleninsel 14 ist in Fig. 7 dargestellt. Eine umlaufende Säuleninseleinfassung aus Tränenblechstreifen 42, deren glatte Flächen die Außenseite der Inseleinfassung bilden, ist auf die Oberseite der Fahrbahnplatten 2 aufgeschweißt, wobei im Bereich der Schweißstellen 43 die Kunststoffbeschichtung 31 entfernt wurde.

In der Mitte der Säuleninsel ist ein Um-Rohr 44 durch die Fahrbahnplatte 2 vertikal nach oben geführt und mit dieser umlaufend verschweißt. Nach oben hin ist das Um-Rohr 44 durch Polysulfid verschlossen. Zwischen Um-Rohr 44 und der Inseleinfassung 42 sind auf die Fahrbahnplatten 2 in vorgegebenen Abständen voneinander Gewindebolzen 45 aufgeschweißt, wobei wiederum die Schweißstelle von der Kunststoffbeschichtung 31 befreit wurde. Die Gewindebolzen 45 dienen zur Befestigung eines Säulenrahmens 46, der mittels Einstellmuttern 47 am Gewindebolzen 45 befestigt ist. Die Schweißnähte zur Befestigung der Inseleinfassung 42, des Um-Rohres 44 sowie des Gewindebolzens 45 sind mit standfester Polysulfid-Dichtmasse 48 abgedichtet. Der Zwischenraum zwischen Um-Rohr 44 und Inseleinfassung 42 wird bis zur Oberkante der Inseleinfassung 42 mit Beton 49 aufgefüllt. Zur Befestigung der Inseleinfassung 42 sind an diese auf der Tränenseite Betonanker 50 angeschweißt sowie Verbindungselemente 51 zwischen gegenüberliegenden Inselwandungen vorgesehen. Die obere Kante der Inseleinfassung wird von einem Winkelprofil 52, das beispielsweise aus Aluminium hergestellt sein kann und Befestigungsschrauben 53 aufweist, umfaßt.

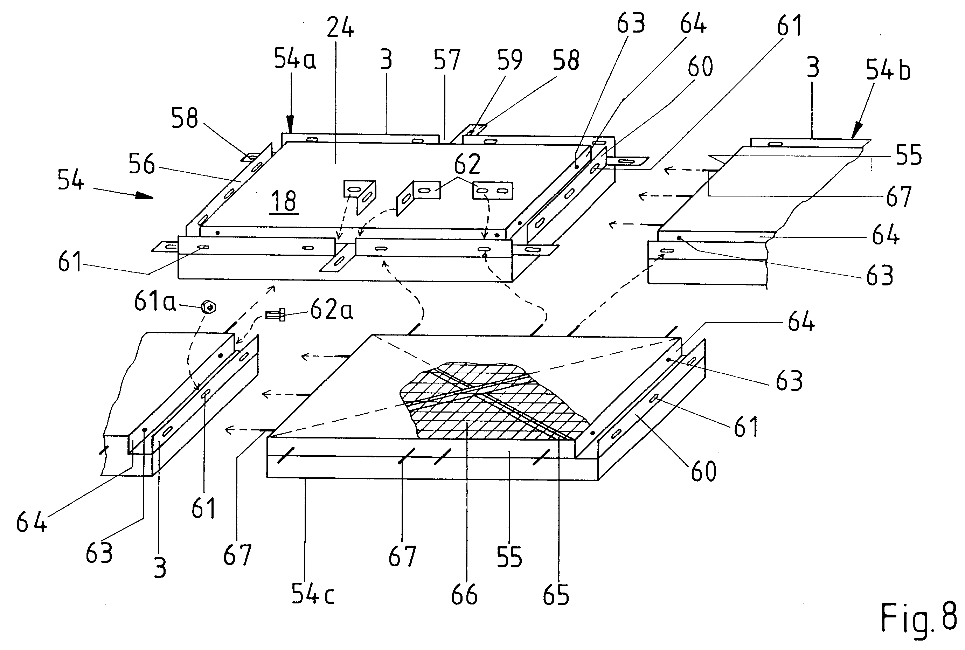

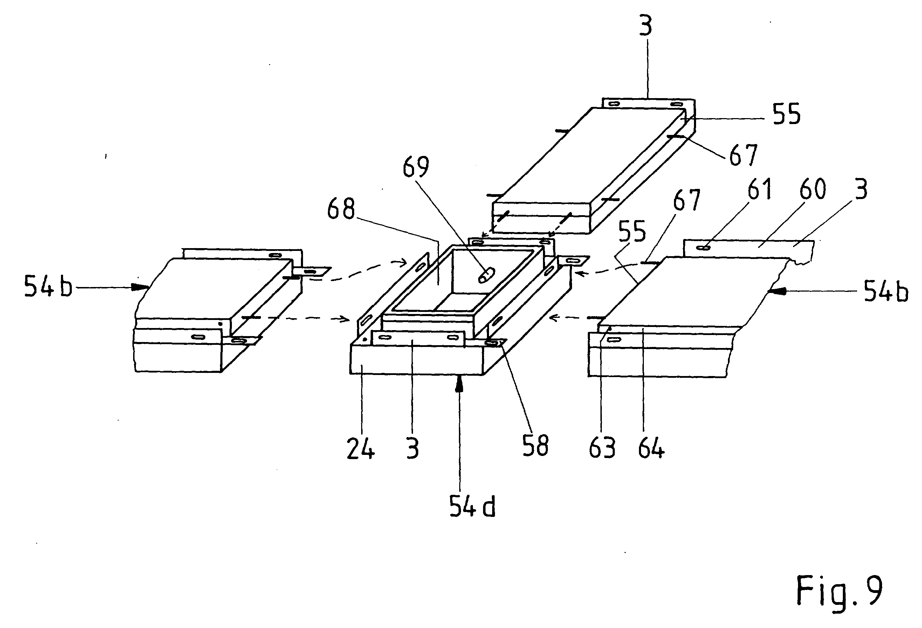

Eine alternative Ausführungsform einer erfindungsgemäßen Fahrbahn 1 ist in den Figuren 8 und 9 dargestellt. In dieser Ausführungsform sind die einzelnen Gitterfelder 18, d. h. U-förmigen Bauteile 3 mit der Betonfüllung 24, als Beton-Fertigteile bzw. -platten 54 ausgebildet. Durch Zusammenfügen mehrerer Beton-Fertigplatten 54 wird so ebenfalls ein gitterförmiges Netz von U-förmigen Bauteile 3 verlegt, wobei die Gitterflächen bzw. -felder 18 mit Beton 24 gefüllt sind. Die Beton-Fertigplatten 54 weisen jeweils an ihren Umfangsrändern U-Profile 3 und/oder Flacheisen 55 auf, deren Oberkante mit der Betonoberfläche bündig ist und die sich in etwa bis zur Hälfte der Betonplattendicke -die im dargestellten Beispiel ca. 15 cm beträgt- nach unten erstrecken, wobei deren Außenseite mit der Betonfläche in der unteren Hälfte des Umfangs bündig ist.

Die Beton-Fertigplatten 54a können einen umlaufenden und an den Ecken verschweißten U-Profilrahmen 56 aufweisen, der an den Ecken in Richtung der Schmalseite und mittig der Längsseite außen Aussparungen 57 aufweist, in denen auf dem Boden der U-Profile 3 Verbindungslaschen 58, die mit Langlöchern 59 versehen sind, eingepaßt sind. Diese Verbindungslaschen 58 kragen über die U-Profile 3 hinaus und greifen in die U-Profile 3 der angrenzenden Platten ein und werden dort mit dem Boden des U-Profils verschraubt. In den Außenwandungen 60 der U-Profile sind ebenfalls Langlöcher 61 vorhanden, durch die Schraub- oder Gewindestangen 67 angrenzender Platten zur gegenseitigen Verbindung gesteckt und mit Muttern 61a verschraubt werden. Zur zusätzlichen Versteifung der Verbindungen sind Befestigungswinkel 62 und Befestigungslaschen in die U-Profile 3 eingelegt und mittels der Gewindestangen oder Schrauben 62a sowie Gewindebohrungen 63 in den Innenwandungen 64 der U-Profile befestigt.

Durch die Langlochverbindungen zusammen mit den Schraubverbindungen können die einzelnen Beton-Fertigplatten 54 gegeneinander mit verschiedenen Neigungswinkeln verbunden werden. Die dann entstehenden minimalen Betonfugen können mit schnellbindendem Spezialbeton vor Ort vergossen werden.

Der U-Profil/Flachprofilrahmen ist innen diagonal jeweils von Ecke zu Ecke mittels Winkeleisen 65, die in den Ecken an den Rahmen angeschweißt sind, versteift. Auf diese Winkeleisen 65 sind über den gesamten Innenraum des Rahmens, d. h. über die gesamte Gitterfläche 18, reichende Baustahlmatten 66 angepunktet.

Es sind auch Beton-Fertigplatten 54b vorgesehen, die nur an den Längsseiten U-Profile 3 aufweisen. Die innenliegende Wandung 64 der U-Profile 3 ist wieder mit Gewindebohrungen 63 zur Aufnahme von Gewindestangen oder Schrauben versehen. An den Schmalseiten befinden sich Flacheisen 55, von denen Gewindestangen 67 senkrecht zur Umfangsfläche, d. h. im wesentlichen horizontal, vorragen.

Erforderlich sind auch Beton-Fertigplatten 54c mit einem U-Profil 3 an nur einer Schmalseite. An den anderen drei Seiten befinden sich Flacheisen 55, die wie oben beschrieben mit Gewindestangen 67 versehen sind.

In einer fertigen Fahrbahn ist zwischen zwei Beton-Fertigplatten 54a mit einem umlaufenden U-Profilrahmen 56 an den Quer- bzw. Schmalseiten jeweils eine Beton-Fertigplatte 54b mit U-Profilen 3 an den Längsseiten angeschlossen. An die Längsseiten der Beton-Fertigteile 54a, 54b mit umlaufenden U-Profilrahmen oder mit nur an den Längsseiten angeordneten U-Profilen schließen sich die Beton-Fertigplatten 54c mit nur einem U-Profil 3 an einer Schmalseite an, wie es in Fig. 8 dargestellt ist.

In Fig. 9 ist der Anschluß von Beton-Fertigplatten 54 an einen handelsüblichen Straßeneinlauf 68 dargestellt. Der Straßeneinlauf 68 ist als allseitig von U-Profilen 3 umgeben, die an den Ecken in beiden Richtungen ausgeklinkt sind. Bis zu den Außenkanten der U-Profile 3 werden diese ebenfalls mit Beton 24 eingegossen. An einer Seite des so fertiggestellten Straßeneinlauf-Fertigteils 54d ragen Verbindungslaschen 58, die auf dem Boden der U-Profile 3 befestigt sind, aus den Aussparungen über die U-Profile 3 hinaus zum Eingreifen in die U-Profile der angrenzenden Beton-Fertigplatten 54.

Dargestellt ist ebenfalls ein Entwässerungsrohr 69, dessen eines Ende in den Straßeneinlauf 68 hineinragt und dessen anderes Ende mit einem der U-Profile 3 verbunden ist. Zusätzlich können die Entwässerungsrohre 69 als Prüfanschluß bei einer wiederkehrenden Anlageprüfung benutzt werden, ohne daß Fugenbereiche geöffnet oder flüssigkeitsdichte kunststoffbeständige Flächen durchbohrt und anschließend verschlossen werden müssen. Es ist also eine zerstörungsfreie Dichtheitsprüfung der Fahrbahn möglich und zwar bevor Schadstoffe in den Untergrund gelangen können, was dem jeweiligen Anlagebetreiber erhebliche Folgekosten erspart.

An die Seite des Straßeneinlaufes 68, von der die Verbindungslaschen 58 vorragen, und an die gegenüberliegende Seite werden Beton-Fertigteile 54b mit nur an den Längsseiten festeingegossenen U-Profilen 3 angeschlossen. Die U-Profile sind mit Langlöchern 61 in den Außenwandungen 60 versehen. Die Innenwandungen 64 der U-Profile 3 weisen die bereits oben beschriebenen Gewindebohrungen 63 auf. An den Quer- bzw. Schmalseiten der Beton-Fertigplatten befinden sich Flacheisen 55, von denen -wie ebenfalls weiter oben beschrieben- Gewindestangen 67 vorragen. Gegebenenfalls können an den Schmalseiten lose U-Profile, die in schnellbindendem Beton eingesetzt sind, angefügt werden. Je nach Rastermaß des Gitters dienen die U-Profile der Aufnahme der Abkantungen 28 der Fahrbahnplatten 2 oder sie werden mit schnellbindendem Beton vor Ort verfüllt. Der innere Aufbau dieser Beton-Fertigplatten 54b entspricht dem der in Fig. 8 dargestellten Beton-Fertigplatten.

In Querrichtung zu den vorbeschriebenen Beton-Fertigplatten 54b mit U-Profilen 3 an den Längsseiten werden beidseitig des Straßeneinlauf-Fertigteils 54d Beton-Fertigplatten 54c angeschlossen, die an nur der dem Straßeneinlauf 68 abgewandten Schmalseite ein U-Profil 3 aufweisen. An den drei anderen Seiten sind Flacheisenprofile 55 mit Gewindestangen 67 vorgesehen.

Ähnlich wie das Straßeneinlauf-Fertigteil 54d können eventuell erforderliche Sonderfertigteile, wie sie für Einpassungen von vorhandenen Schächten usw. vorkommen können, in der gleichen Art als Fertigteile hergestellt sein, so daß sie auf der Baustelle in eine erfindungsgemäße Fahrbahn integriert werden können.

Eine Fahrbahn, wie sie in den Figuren 1 bis 7 dargestellt ist, wird wie folgt hergestellt:

Auf den vorhandenen Fahrbahnoberbau 15a werden U-Profile 16 mit nach oben offenem Querschnitt in Form eines Gitters verlegt und mit T-Verbindern 17 miteinander verbunden. Die U-Profile werden rechteckig zueinander ausgerichtet und mittels der an den T-Verbindern vorhandenen Gewindestangen 40 in ihrer vertikalen Lage so eingestellt bzw. nivelliert, daß ein stetiges Gefälle zu einem Straßeneinlauf 68 hin gewährleistet ist. Anschließend werden an vorbestimmten Punkten Löcher in den vorhandenen Fahrbahnoberbau und -unterbau gebohrt und dort Bodenanker 19 eingesetzt, die dann mit den U-förmigen Bauteilen verschweißt werden. Nachdem auf diese Weise die Lage der U-förmigen Bauteile gesichert ist und eventuelle Einbauten ebenfalls in ihrer Sollposition festgesetzt sind, werden in den sich durch die Verlegung ergebenden Gitterflächen 18 Baustahlmatten zur Verteilung der Belastungen eingelegt und in die Gitterflächen schnellfließender und aushärtender Spezialbeton gefüllt. Die Beton-Auffüllung wird zu den jeweiligen Oberkanten der U-förmigen Bauteile plangezogen. Nach einer Aushärtezeit von ca. 12 Stunden wird auf den Betonflächen eine in den Gittermitten etwa 2 bis 3 mm dicke und zu den Rändern hin auslaufende Gummigranulatschicht 25 aufgebracht, die sowohl der Geräuschdämmung als auch der Bewegungsaufnahme der Fahrbahnplatten dient. Diese Gummigranulatschicht wird anschließend mit einer Kunststofffolie 26, die bis in die U-förmigen Bauteile hineinreicht, abgedeckt. Auf die Kunststofffolie werden die oben beschriebenen kunststoffbeschichteten Tränenblech-Stahlplatten 2, 27, 27a aufgelegt, wobei die Abkantungen 28 in die U-förmigen Bauteile 3 hineinragen. Die Fahrbahnplatten werden ausgerichtet und mittels der Drehflügel 22 in den U-förmigen Bauteilen befestigt. Nach der Fixierung der Fahrbahnplatten mit der Drehflügelbefestigung werden Moosgummiabdichtungen 32 derart in den verbleibenden Fugenraum gedrückt, daß sie zwar die Seitenbereiche zu den Fahrbahnplatten hin abdichten, aber nicht unten im U-Profil aufliegen. Alle dann noch nach unten oder zu den Seiten hin offenen Bereiche werden anschließend mit standfester Polysulfid-Dichtmasse verschlossen. Erst wenn diese Masse angezogen hat, wird die Fuge bis etwa 5 bis 8 mm Abstand zur Fahrbahnoberfläche mit fließfähiger Polysulfid-Dichtmasse 33 aufgefüllt. Aufgrund der rauhen Oberfläche der Kunststoffbeschichtung der Tränenblech-Stahlplatten ergibt sich zu den Flanken hin eine dauerhaft dichte Verbindung.

Sind Fahrbahneinbauten 13 wie Domschächte, Straßeneinläufe usw. in die Fahrbahn zu integrieren, so werden die Umrisse dieser Einbauten durch die U-förmigen Bauteile umschlossen, wobei die in den U-förmigen Bauteilen befindlichen Drehflügelbefestigungen 20, 21, 22 so seitlich versetzt werden, daß die dort einzulegenden Fahrbahnplatten zu diesen Einbauten hin an der Fahrbahnoberfläche eine Fuge von ca. 15 mm Breite ergeben.

Die U-förmigen Bauteile können dabei zu den Einbauten hin mit Langlöchern versehen werden, die zum einen den nicht benötigten Befestigungsflügelteil der Drehflügelbefestigung aufnehmen und zum anderen der Befestigung der U-förmigen Bauteile zu den Einbauten hin dienen, indem dort selbstsichernde Schrauben eingesetzt werden, die entweder durch die Einbautenwandung hindurchreichen und auf der Innenseite der Einbauten mittels einer selbstsichernden Mutter, der ein Dichtungsring unterlegt wird, gekontert werden oder mittels Bodenanker an Betonumrandungen befestigt werden.

Ähnlich werden auch Fahrbahnübergänge zu Bordsteinen und angrenzenden Fahrbahnbereichen erstellt, wobei angrenzende Fahrbahnbereiche zusätzlich durch das umlaufende Einsetzen sogenannter Hochbordsteine erstellt werden können.

Da diese Bereiche aufgrund der Fahrbahngefälle schon außerhalb der flüssigkeitsdicht und stoffbeständig zu erstellenden Be- und Abfüllflächen liegen, können die dort vorhandenen Fügen, deren Abdichtung eventuell problematisch ist, da sie auf den Schmalseiten belastet werden, in üblicher Weise, d. h. nicht flüssigkeitsdicht mittels Sand oder TOK-Band -je nach anschließender Fahrbahnart- ausgeführt werden.

Genauso können Säuleninseln eingefaßt und abgedichtet werden. Aufgrund der Möglichkeit, auch runde Anpassungen einfach mittels Stahl erstellen zu können, können Säuleninseln jedweder Form ebenfalls flüssigkeitsdicht und stoffbeständig in die Fahrbahn eingepaßt werden.

In der Regel empfiehlt sich aber ein kompletter Überbau der Inselbereiche -falls notwendig mittels Abriss der vorhandenen Inseln-, da dann gleichzeitig die eventuell noch vorhandenen Säulenschächte, die nicht mehr benötigt werden, komplett überbaut und die Rohr- und Kabeldurchgänge durch den Fahrbahnbereich mittels fest mit der Fahrbahnoberfläche verschweißten Um-Rohren ebenfalls dicht erstellt werden können.

Die neue Säuleninsel 14 wird dabei aus beispielsweise 15 cm hohen Tränenblechstreifen 42 mit nach innen zur Insel gerichteter Tränenoberseite erstellt, wobei die Streifen entsprechend der gewünschten Inselform gebogen oder gekantet und mit der Fahrbahnoberfläche verschweißt oder verschraubt werden.

Die so errichtete Inselumrandung, die mehrfach - je nach Insellänge- an den Längsseiten durch Querverstrebungen 51 gegeneinander versteift und durch Anschweißen von Stahlankern 50 auf der Umrandungsinnenseite für die schlüssige Verbindung mit Beton 49 vorbereitet wird, wird nach Fertigstellung und Abdichtung der Inselumrandung zur neuen Fahrbahnoberfläche hin mit Beton gefüllt, wobei der eingefüllte Beton zu den Inselrahmenoberkanten hin plan abgezogen wird.

Da die Fahrbahn, auf die die Säuleninsel aufgesetzt ist, schon die geforderte Dichtigkeit und Stoffbeständigkeit aufweist, kann die Säuleninsel mit beliebigem Beton, der auch noch mit Fliesen oder ähnlichem abgedeckt werden kann, erstellt werden.

Die Inselumrandung wird anschließend von außen -also im sichtbaren Bereich- mit schlagfester Farbe gestrichen und zur Inseloberfläche hin mit einem Winkelprofil 52 aus Aluminium oder Edelstahl versehen.

Da alle Fahrbahnkomponenten weitgehend werksseitig vorgefertigt werden können, sind am Einbauort sehr kurze Montagezeiten möglich, wobei auch noch abschnittsweise montiert werden kann, so daß beispielsweise auch während der Umbauzeiten der Tankbetrieb einer Tankstelle aufrechterhalten werden kann.

Weil sämtliche U-förmigen Bauteile aus Stahl bestehen und die einzelnen Bauteile untereinander jeweils mehrfach leitend verbunden sind, genügt eine einmalige Erdung des Gesamtsystems zum jeweiligen Betriebszentralerder -üblicherweise eine Dachsäule-, damit sichergestellt ist, daß statische Aufladungen von Fahrzeugen kontrolliert, über die leitfähige Kunststoffbeschichtung, deren Leitfähigkeit < 10⁸ Ohm beträgt, großflächig dorthin abgeleitet werden, so daß statische Aufladungen bei Beginn der Be- oder Abfüllvorgänge schon nicht mehr vorhanden sind.

Wassergefährdende Stoffe werden durch die U-förmigen Bauteile abgeleitet oder verbleiben auf der Fahrbahnoberfläche, von der sie leicht durch geeignete Reinigungsmittel entfernt werden können.

Bei Bedarf können auch Teile des Systems aufgenommen und wiederverwendet werden oder Fahrbahnplatten hochgenommen, in den U-förmigen Bauteilen neue Rohre oder Kabel verlegt und anschließend die hochgenommenen Fahrbahnplatten wieder eingesetzt werden, wobei dann nur die entsprechenden Bereiche neu mit Dichtmasse gefüllt werden müssen.

Aufgrund der Modulbauweise der Fahrbahn sind Fahrbahnerveiterungen bzw. -änderungen und nachträgliche Einbauten jederzeit möglich.

Soll eine erfindungsgemäße Fahrbahn so schnell wie möglich errichtet werden, können -anstatt vor Ort zunächst U-förmige Bauteile zu verlegen und diese dann einzubetonieren- Beton-Fertigplatten 54 mit bereits eingegossenen U-förmigen Bauteilen 3 eingesetzt werden. Das erfindungsgemäße Verfahren zur Herstellung einer Fahrbahn mit solchen Beton-Fertigplatten wird nachfolgend anhand der Figuren 8 und 9 beschrieben:

Zunächst wird aus Flacheisen 55, an denen senkrecht vorragende Gewindestangen 67 befestigt sind, und/oder U-förmigen Bauteilen 3 ein rechteckiger Rahmen geschweißt, wobei die Gewindestangen nach außen gerichtet, die U-förmigen Bauteile senkrecht zur Rahmenebene offen und die Schweißnähte in den Rahmenecken angeordnet sind. Sämtliche Stahlteile werden korrisionsgeschützt. Dieser Rahmen wird mittels diagonal von einer Ecke zur gegenüberliegenden Ecke verlaufenden Winkeleisen 65 versteift. Auf diese Winkeleisendiagonalen werden Bau-stahlmatten 66 angepunktet, die sich über den gesamten Innenraum des Rahmens erstrecken. Anschließend wird der Rahmen in einen Vergußrahmen eingesetzt und komplett, ca. 15 cm dick, mit Beton 24 vergossen.

Eventuell erforderliche Sonder-Betonfertigteile, wie sie für Einpassungen von vorhandenen Schächten usw. erforderlich sein können werden in ähnlicher Weise werkseitig komplett vorbereitet, so daß sie auf der Baustelle problemlos in die Fahrbahn integriert werden können.

Die so komplett vorgefertigten Beton-Fertigplatten 54 werden nach der Betonabbindezeit zur Baustelle befördert und können auf eine vorhandene Fahrbahn oder auf ein vorbereitetes Fahrbahnplanum aufgesetzt werden.

Werden die Beton-Fertigteile auf eine vorhandene Fahrbahn aufgesetzt, so wird auf dieser Haftbeton in einer geeigneten Stärke aufgetragen, wobei schon Fahrbahnunebenheiten und gewünschte Gefälle berücksichtigt werden.

Ist nur ein Fahrbahnplanum vorhanden, so wird dieses mit mindestens 5 cm dickem Schnellbinder-Beton, in dem Baustahlmatten eingelegt werden, überbaut, wobei ebenfalls die später gewünschten Gefälle berücksichtigt werden.

In den Haftbeton, sei es auf einer vorhandenen Fahrbahn oder auf einem Fahrbahnplanum, werden die einzelnen Betonfertigteile ausgelegt, ausgerichtet und gegeneinander verschraubt. Alle in den U-förmigen Bauteilen nach der Verlegung vorhandenen Stoßkanten, offenen Bohrungen, Schraubköpfe oder Muttern werden mittels standfester Polysulfid-Dichtmasse abgedichtet und zusätzlich mit einem dehnfähigen reißfestem Dichtungsband flüssigkeitsdicht und stoffbeständig abgedichtet.

Auch bei dieser Variante genügt eine einzige Potentialausgleichsverbindung mit einem bauseits vorhandenen Zentralpotentialausgleichserder, wie beispielsweise einem Dachpfeiler oder einer Erdungsplatte, da sämtliche U-förmigen Bauteile mittels Schraubtechnik untereinander verbunden sind.

Die weiteren Verfahrensschritte entsprechen dem weiter oben im Zusammenhang mit den Figuren 1 bis 7 beschriebenen Verfahren, wobei -da keine auszuhärtenden großflächigen Betonteile vorhanden sind- der aus Gummigranulat, Folienabdeckung und kunststoffbeschichteter Tränenblechabdeckung gebildete Fahrbahnoberbau direkt anschließend ohne Wartezeit eingebaut werden kann. Je nach Erfordernis können dann auch sofort alle Fugen oder Teilfugen vorschriftsgemäß verfugt werden. Die Fahrbahn ist dann nach ca. 12 Stunden voll belastbar und kann uneingeschränkt befahren werden.

## Patentansprüche

1. Flüssigkeitsdichte und stoffbeständige Fahrbahn für Beund Abfüllflächen von Anlagen zum Umgang mit wassergefährdenden Stoffen, insbesondere im Bereich von Tankstellen und Tanklagern, mit einer Mehrzahl von nebeneinander liegenden Fahrbahnplatten, deren Oberseiten die Fahrbahnfläche ausbilden, wobei zwischen benachbarten Platten vorhandene Fugen abgedichtet sind, dadurch gekennzeichnet, daß unter den Fugen (4) längs diesen durchlaufende, im Querschnitt U-förmige Bauteile (3) mit nach oben zur Fahrbahnfläche hin offenem Querschnitt angeordnet sind, daß ferner jede Fahrbahnplatte (2) an ihren Rändern auf der der Fahrbahnfläche abgewandten Seite einen umlaufenden nach unten ragenden Vorsprung (28) aufweist, der in die U-förmigen Bauteile (3) hineinragt, und daß eine Befestigungseinrichtung (30, 61, 20, 21, 22) vorgesehen ist, mit der die Fahrbahnplatten (2) in den jeweiligen U-förmigen Bauteilen (3) befestigt sind.

2. Fahrbahn nach Anspruch 1, dadurch gekennzeichnet, daß die U-förmigen Bauteile im eingebauten Zustand der Fahrbahnplatten mit Dichtmasse (32, 33) gefüllt sind, wobei zwischen der Dichtmasse (32, 33) und dem Boden der U-förmigen Bauteile (3) ein Freiraum vorhanden ist.

3. Fahrbahn nach Anspruch 2, dadurch gekennzeichnet, daß die Oberkante der Dichtmasse (32, 33) unterhalb der Fahrbahnfläche liegt.

4. Fahrbahn nach einem der Ansprüche 1 bis 3, dadurch gekennzeichnet, daß die Fahrbahnplatten (2) so verlegt sind, daß in den Fugen (4) ausschließlich T- und L-Kreuzungen (6) vorhanden sind.

5. Fahrbahn nach Anspruch 4, dadurch gekennzeichnet, daß die U-förmigen Bauteile (3) U-Profile (16) aufweisen, die mittels im Querschnitt U-förmigen und in der Draufsicht T- oder L-förmigen Verbindern (17) miteinander verbunden sind.

6. Fahrbahn nach einem der Ansprüche 1 bis 5, dadurch gekennzeichnet, daß die Fahrbahnplatte (2) und die U-förmigen Bauteile (3) aus Metall hergestellt sind.

7. Fahrbahn nach Anspruch 6, dadurch gekennzeichnet, daß die Fahrbahnplatten aus Blech (27) hergestellt sind, dessen Oberseite (27a) Erhebungen und Vertiefungen aufweist und dessen Ränder zur Ausbildung der umlaufenden Vorsprünge nach unten abgekantet sind, wobei die Stoßkanten der Abkantungen (28) flüssigkeitsdicht abgedichtet sind.

8. Fahrbahn nach Anspruch 7, dadurch gekennzeichnet, daß das Blech ein Tränenblech (27) ist.

9. Fahrbahn nach einem der Ansprüche 1 bis 8, dadurch gekennzeichnet, daß die Oberseite der Fahrbahnplatten (2) mit elektrisch leitfähigem, rutschfesten, stoffbeständigen Kunststoff (31) beschichtet sind, dessen Oberseite die Fahrbahnfläche ausbildet.

10. Fahrbahn nach Anspruch 9, dadurch gekennzeichnet, daß die Dicke der Kunststoffbeschichtung (31) mindestens 6 mm beträgt.

11. Fahrbahn nach einem der Ansprüche 1 bis 10, dadurch gekennzeichnet, daß in den Seitenflächen der Vorsprünge (28) im wesentlichen parallel zur Fahrbahnfläche verlaufende längliche Ausnehmungen (30, 61) vorgesehen sind und die Befestigungseinrichtung als Drehflügelverbindung (20, 21, 22) ausgebildet ist, deren Drehflügel (22) zur Befestigung der Fahrbahnplatte (2) in die Ausnehmung (30, 61) eingreifend drehbar ist.

12. Fahrbahn nach einem der Ansprüche 1 bis 11, dadurch gekennzeichnet, daß ein Teil der Fahrbahnplatten (2) als Oberflächenwasserrinne (11) ausgebildet ist.

13. Fahrbahn nach einem der Ansprüche 1 bis 12, dadurch gekennzeichnet, daß ein Teil der Fahrbahnplatten (2) als Überfahrrampe (8) verlegt ist, wobei der der Fahrbahn abgewandte Rand (10) der Fahrbahnplatten (2) außerhalb der Be- bzw. Abfüllfläche liegt.

14. Fahrbahn nach einem der Ansprüche 1 bis 13, dadurch gekennzeichnet, daß die U-förmigen Bauteile (3) mit stetigem Gefälle zu mindestens einem Straßeneinlauf (12, 68) hin verlegt sind, der an einem Abscheider angeschlossen ist.

15. Fahrbahn nach Anspruch 14, dadurch gekennzeichnet, daß zur Entwässerung der U-förmigen Bauteile (3) ein Rohr (69) vorgesehen ist, dessen eines Ende in den Straßeneinlauf (12, 68) hineinragt und dessen anderes Ende mit dem am tiefsten liegenden U-förmigen Bauteil (3) verbunden ist.

16. Fahrbahn nach einem der Ansprüche 1 bis 15, dadurch gekennzeichnet, daß die U-förmigen Bauteile (3) bis zu ihrer Oberkante einbetoniert sind.

17. Fahrbahn nach Anspruch 16, dadurch gekennzeichnet, daß Beton-Fertigplatten (54) vorgesehen sind, die jeweils an mindestens einem ihrer Ränder auf der der Fahrbahnfläche zugewandten Seite ein anbetoniertes, U-förmiges, zur Fahrbahnfläche hin offenes Bauteil (3) aufweisen, dessen Oberkante in oder unterhalb der Oberseite der jeweiligen Beton-Fertigplatte liegt.

18. Fahrbahnplatte nach Anspruch 17, dadurch gekennzeichnet, daß längs der anderen Ränder der Beton-Fertigplatten (54) an deren Umfangsfläche Flachprofile (55) anbetoniert sind, deren Oberkante ebenfalls in oder unterhalb der Oberseite der Beton-Fertigplatte liegt und von denen Befestigungsmittel (67) vorragen, die zum Eingriff mit in den U-förmigen Bauteilen (3) ausgebildeten Befestigungsmitteln (61) geeignet sind, um benachbarte Beton-Fertigplatten (54) miteinander zu verbinden.

19. Fahrbahn nach Anspruch 17 oder 18, dadurch gekennzeichnet, daß die Beton-Fertigplatten (54) rechteckig sind.

20. Fahrbahn nach einem der Ansprüche 17 bis 19, dadurch gekennzeichnet, daß in den Außenwandungen (60) der U-förmigen Bauteile (3) bis zu deren Boden sich erstreckende Aussparungen (57) vorgesehen sind, durch die hindurch auf dem Boden befestigte Verbindungslaschen (58) über die U-förmigen Bauteile (3) hinausragen, um in die U-förmigen Bauteile (3) einer angrenzenden Beton-Fertigplatte zur Verbindung mit diesen einzugreifen.

21. Fahrbahn nach einem der Ansprüche 1 bis 20, dadurch gekennzeichnet, daß bei Tankstellen eine Säuleninsel (14) mit Zapfsäulen auf die Fahrbahnplatten (2) aufgesetzt und an diesen befestigt ist und die zu den Zapfsäulen führenden Rohre und Kabel in Um-Rohren (44) durch die Fahrbahnplatten (2) hindurchgeführt sind, wobei die Um-Rohre (44) mit den Fahrbahnplatten (2) flüssigkeitsdicht und stoffbeständig verbunden sind.

22. Fahrbahnplatten nach Anspruch 21, dadurch gekennzeichnet, daß die Um-Rohre (44) oben durch eine Dichtmasse verschlossen sind.

23. Verfahren zur Herstellung einer flüssigkeitsdichten und stoffbeständigen Fahrbahn, bei dem eine Mehrzahl von Fahrbahnplatten (2) nebeneinandergelegt und zwischen diesen vorhandene Fugen (4) abgedichtet werden, dadurch gekennzeichnet, daß unter den Fugen (4) ein längs diesen durchlaufendes Rinnensystem (3) verlegt wird, das zu mindestens einem Straßeneinlauf (12, 68) hin entwässert.

24. Verfahren nach Anspruch 23, gekennzeichnet durch folgende Schritte:
a) ein sich im wesentlichen horizontal erstreckendes Gitter aus nach oben hin offenen U-förmigen Bauteilen (3) wird auf dem vorhandenen Fahrbahnuntergrund (15a) ausgelegt und ausgerichtet;
b) die Gitterfächer werden mit Beton (24) ausgegossen;
c) nach dem Erhärten des Betons werden Fahrbahnplatten (2), die an ihren Rändern auf der der Fahrbahnfläche abgewandten Seite einen umlaufenden, nach unten ragenden Vorsprung (28) aufweisen, auf dem Beton (24) verlegt, wobei die Vorsprünge (28) in die U-förmigen Bauteile (3) hineinragen;
d) die Fahrbahnplatten (2) werden an den U-förmigen Bauteilen (3) befestigt.

25. Verfahren nach Anspruch 23, gekennzeichnet durch folgende Schritte:
a) es werden Betonplatten (54) vorgefertigt, die jeweils an mindestens einem ihrer Ränder auf der der Fahrbahnfläche zugewandten Seite ein anbetoniertes, U-förmiges, zur Fahrbahnfläche hin offenes Bauteil (3) aufweisen und längs deren andere Ränder an den Umfangsflächen Flachprofile (55) anbetoniert sind, wobei die Oberkante der U-förmigen Bauteile (3) und der Flachprofile (55) in oder unterhalb der Oberseite der Beton-Fertigplatte liegt und von den Flachprofilen (55) Befestigungsmittel (67) vorragen, die zum Eingriff mit in den U-förmigen Bauteilen (3) ausgebildeten Befestigungsmitteln (61) geeignet sind;
b) auf den vorhandenen Fahrbahnuntergrund wird Haftbeton aufgetragen;
c) die Beton-Fertigplatten (54) werden auf den Haftbeton aufgesetzt, ausgerichtet und mit den Befestigungsmitteln (61, 61a, 67) aneinander befestigt;
d) die Fahrbahnplatten (2), die an ihren Rändern auf der der Fahrbahnfläche abgewandten Seite einen umlaufenden nach unten ragenden Vorsprung (28) aufweisen, werden auf den Beton-Fertigplatten (54) verlegt, wobei die Vorsprünge (28) in die U-förmigen Bauteile (3) hineinragen;
e) die Fahrbahnplatten (2) werden an den U-förmigen Bauteilen (3) befestigt.

26. Verfahren nach Anspruch 24 oder 25, dadurch gekennzeichnet, daß der Schritt des Verlegens der Fahrbahnplatten beinhaltet, daß zuvor eine Gummigranulatschicht (25) auf die Betonoberfläche und auf diese wiederum eine Kunststofffolie (26) aufgebracht wird, die bis in die U-förmigen Bauteile (3) hineinreicht.

27. Verfahren nach einem der Anspruche 24 bis 26, dadurch gekennzeichnet, daß nach dem Befestigen der Fahrbahnplatten an den U-förmigen Bauteilen (3) diese mit Dichtmasse (32, 33) gefüllt werden, wobei die Oberkante der Dichtmasse unter der Oberkante der Fahrbahn und die Unterkante der Dichtmasse (32, 33) in einem Abstand vom Boden der U-förmigen Bauteile (3) liegt.
